# EUROPEAN PATENT SPECIFICATION

(11) **EP 0 367 763 B1**
(45) Date of publication and mention of the grant of the patent: **12.05.1993**
(21) Application number: 88903423.7
(22) Date of filing: 10.03.1988
(51) Int. Cl.: F16K 17/34

(54) **PRESSURE DROP HOSE VALVE**
SCHLAUCHVENTIL, DAS AUF EINEM DRUCKABFALL REAGIERT
SOUPAPE DE TUYAU FLEXIBLE REAGISSANT A UNE CHUTE DE PRESSION

(30) Priority: 17.06.1987 SE 8702544
(43) Date of publication of application: 16.05.1990
(73) Proprietor: HIAB-FOCO AB, S-824 01 Hudiksvall (SE)
(72) Inventor: LINDMARK, Gunnar, S-824 00 Hudiksvall (SE)
(74) Representative: Wiklund, Erik
(86) International application number: SE8800121
(87) International publication number: WO8810387

(56) References cited:
- DE-A- 2 820 811
- US-A- 2 439 116
- US-A- 2 750 956

## Description

The present invention relates to a pressure drop hose valve as defined in the preamble of claim 1.

It is already known to mount pressure drop hose valves in hydraulic or pressure fluid systems of different types, for cutting off the supply of pressure fluid in case a pressure drop or damage occurs in some part of the system downstream of the valve. A common type of pressure drop hose valve is provided with a valve element that is urged towards the open position by a compression spring and has a restriction where the pressure fluid is subjected to a pressure drop. An increased flow due to e.g. a pressure drop in the hose results in an increase of the pressure drop across the valve member which thus is urged against a valve seat, thereby to close the communication between the inlet and the outlet of the valve. However, efficacious prior art pressure drop hose valves are of complicated construction, and the design of the restrictions such that the valves will depend heavily on viscosity, which implies that the valves operate at different activating flows under varying working conditions.

Another disadvantage of the known pressure drop hose valves is that the force exerted by the compression spring on the valve member tends to reopen the valve, despite a pressure drop having occured. If the valve is mounted in e.g. the boom of a construction machine, the dynamics in the boom might temporarily decrease or eliminate the fluid pressure urging the valve towards the closed position. The compression spring may then reopen the valve, which restarts the closing operation and lowers the boom in an oscillating movement, with the ensuing risk of damage to the construction machine and its implements and injury to the workmen standing round.

As an example of the prior art reference may be made to US-A-2 750 956, which discloses a pressure drop hose valve of the type generally defined in the preamble of claim 1. In this valve not only the seat in the passage way but also the mating front portion of the valve element are cylindrical and freely movable relative to each other when the valve is actuated, despite the fact that a fluid-sealing O-ring is provided in the cylindrical surface of said front portion of the valve element. In order to retain the valve element in the closing position separate locking pins provided in the valve body will be actuated and drop down behind the valve element when the latter moves from the initial, opening position to the closing position, in a manner to prevent the valve element from returning to the initial position.

It is the object of the present invention to further develop the above-mentioned valve so as to provide a pressure drop hose valve which is simple and reliable and affords a distinct shut-off of the conduit system. According to the invention this object is achieved by the features defined in claim 1.

In the accompanying drawing
Fig. 1 is a longitudinal section through a pressure drop hose valve according to the invention in the open position, and
Fig. 2 is a section through the same valve in the closed position.

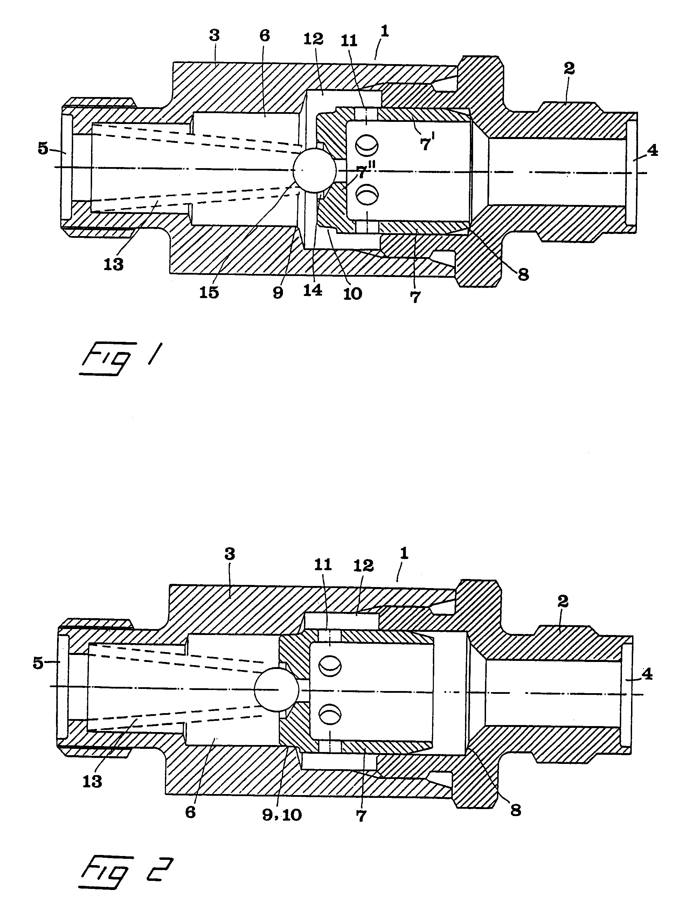

The valve shown in the drawing comprises a body 1 consisting of two parts 2 and 3 screwed together by means of an inner and an outer thread, respectively. The body part 2 is provided with an inlet 4 and the body part 3 with an outlet 5, which can be connected to the other components of the conduit system in some suitable manner. The inlet 4 and outlet 5 communicate with one another via a throughflow passage or bore 6 extending through the body 1. In this passage 6, a valve cone or element 7 is reciprocable between a stop 8 in the body part 2 and a valve seat 9 in the body part 3.

In the described, preferred embodiment, the valve cone 7 is composed of a hollow cylinder or receptacle which is open towards the inlet 4 and has a shell-shaped wall 7' and an end wall 7''. Said end wall 7'' seals the cylinder body at the end facing the outlet. The outside of the end portion of the valve cone 7 facing the outlet is formed as a seat surface 10. Furthermore, the valve cone is provided with a suitable number of circumferential, radial holes 11 through which fluid can pass from within the cavity in the valve cone. In the described embodiment, the cylinder wall 7' is adapted to seal against the inside of the passage portion provided in the body part 2. In order to permit pressure fluid to flow through the valve, the passage 6 of the valve body is enlarged to form a by-pass 12 in the area outside the throughflow holes 11. The axial extension of this passage is at least of the same length as the path of movement of the holes 11 when the valve cone 7 is displaced between the front and back extreme positions of the holes.

Positioned between the outlet 5 and the valve cone 7 is a compression spring 13 which constantly strives to urge the valve cone towards the inlet 4, i.e. towards the open position of the valve. The valve seat 9 provided in the passageway of the body and the seat surface 10 of the valve cone are mutually adapted in such a way that they are constantly held to one another by wedging action when, after a pressure drop, the valve cone is moved into engagement with the seat. In practice, this characteristic wedging effect of the invention can be achieved in different ways. For example, the seat surface can be slightly conical or tapering to render the wedging of the seat surface to the valve seat more secure. Also the seat surface 10 can be partially conical or partially cylindrical, i.e. it can have a conical portion merging into a cylindrical portion. The valve seat 9 can also be slightly conical to provide the said wedging action either in cooperation with a conical seat surface 10 or in cooperation with a cylindrical seat surface.

In the normal condition where the valve cone 7 is in the open position shown, hydraulic oil or other fluid flows in the direction from the inlet 4 towards the outlet 5 via the holes 11 and the by-pass 12. Should a pressure drop occur downstream of the valve, the oil is evacuated on the exit side of the valve cone, resulting in an increased flow through the holes 11, which in turn causes to the counteracting force of the compression spring 13 to be overcome so that the valve cone is urged into engagement with the seat 9, shutting off the passage. Since the seat surface 10 is distinctly wedged in the valve seat 9, the risk of an unintentional reopening of the valve is eliminated.

In the embodiment shown, there is provided, in the end wall 7'' of the valve cone, an opening 14 forming a further valve seat for a valve member 15 disposed between the compression spring 13 and the valve cone 7 and having the form of ball, a cone or the like. In this way, a pressure limiting valve is obtained as an integrated part of the pressure drop hose valve. The pressure limiting valve functions of course only when the pressure drop hose valve is closed, and its characteristic depends on the compression spring 13.

It will be appreciated that the invention is not limited only to the embodiment described above and shown in the drawing. Thus, the valve cone need not be in the form of a hollow cylinder. For example, the valve cone may consist of a substantially solid body around which flows the fluid in question when passing from the inlet to the outlet. Although it is preferred to dispose a compression spring between the outlet and the valve cone, it is also possible to position a tension spring in the area between the inlet and the valve cone to urge the valve cone towards the open position and to retain the ball or the valve member 15 in the closed position. Although it is preferred to give both the valve cone and its associated valve seat a rotationally symmetric form, it is possible to design these components with an optional non-circular cross-section. Finally, it should be mentioned that the valve according to the invention naturally can be used in conduits other than hose conduits.

## Claims

1. Pressure drop hose valve comprising a valve body (1) having an inlet (4) and an outlet (5) as well as a throughflow passageway (6) which connects the inlet and the outlet and in which a valve element (7) is axially movable, a front portion of the valve element (7) facing the outlet (5) and being formed with a seat surface (10) to co-operate with a valve seat (9) provided in the passageway of the valve body (1) and being located at a distance from said seat surface (10) of the valve element, a spring (13) being provided to strive to normally displace the valve element (7) towards an open position of the valve **characterised** in that at least one of said valve seat (9) and said seat surface (10) is conical so as to hold the front portion of the valve element (7) in the valve seat (9) by a wedging action therebetween to close the valve as soon as said valve element has been displaced towards the outlet with its front portion into the valve seat after actuation of the valve following a pressure drop in the hose.

2. Valve as claimed in claim 1, wherein said valve seat (9) is cylindrical and said seat surface (10) of the valve element (7) is conical.

3. Valve as claimed in claim 1 or 2, wherein the valve element (7), in its front portion facing the outlet (5) is provided with an opening (14) forming a further valve seat for a spring-loaded valve member (15), e.g. a ball, the spring (13), said valve member (15) and said opening (14) forming a pressure limiting valve in the actuated condition of the pressure drop hose valve.

## Patentansprüche

1. Schlauch-Sicherheitsventil umfassend ein Ventilgehäuse (1) mit einem Einlass (4) und einem Auslass (5) und einem diese verbindenden Durchflussskanal (6), in dem ein Ventilelement (7) axial beweglich ist, wobei ein Vorderteil des Ventilelements (7) dem Auslass (5) zugewandt und mit einer Sitzfläche (10) ausgebildet ist, um mit einem im Kanal des Ventilgehäuses (1) ausgebildeten Ventilsitz (9) zusammenzuwirken, welcher sich im Abstand von der Sitzfläche (10) des Ventilelements befindet, und wobei eine Feder (13) danach strebt, normalerweise das Ventilelement (7) in Richtung zu einer offenen Position des Ventils zu versetzen, dadurch **gekennzeichnet,** dass zumindest einer des Ventilsitzes (9) und der Sitzfläche (10) kegelförmig ist, so dass der Vorderteil des Ventilelements (7) im Ventilsitz (9) durch eine zwischen ihnen entstehende Keilwirkung festgehalten wird, um das Ventil zu schliessen, sobald das Ventilelement mit seinem Vorderteil in Richtung zum Auslass in den Ventilsitz hinein versetzt worden ist, nachdem das Ventil wegen Druckabfall im Schlauch eingeschaltet worden ist.

2. Ventil nach Anspruch 1, wobei der Ventilsitz (9) zylindrisch und die Sitzfläche (10) des Ventilelements (7) kegelförmig ist.

3. Ventil nach Anspruch 1 oder 2, wobei das Ventilelement (7) in seinem dem Auslass (5) zugewandten Vorderteil mit einer Öffnung (14) versehen ist, die einen weiteren Ventilsitz für ein federbelastetes Abdichtglied (15), z.B. eine Kugel, bildet, wobei die Feder (13), das Abdichtglied (15) und die Öffnung (14) im eingeschalteten Zustand des Schlauch-Sicherheitsventils ein Druckbegrenzungsventil bilden.

## Revendications

1. Soupape de tuyau flexible réagissant à une chute de pression, comportant un corps de soupape (1) ayant une entrée (4), une sortie (5) et un canal de passage (6) qui relie entre elles ladite entrée et ladite sortie et dans lequel est prévu un élément de soupape (7) mobile axialement, une partie avant de l'élément de soupape (7) faisant face à la sortie (5) et présentant une surface de siège (10) destinée à coopérer avec un siège de soupape (9) prévu dans le canal de passage du corps de soupape (1) et écarté de ladite surface de siège (10) de l'élément de soupape, un ressort (13) tendant normalement à déplacer l'élément de soupape (7) vers une position ouverte de la soupape, **caractérisée** en ce qu'au moins l'un d'entre le siège de soupape (9) et la surface de siège (10) est conique de façon à maintenir coincée la partie avant de l'élément de soupape (7) dans le siège de soupape (9) afin de fermer la soupape aussitôt que ledit élément de soupape a été déplacé vers la sortie, sa partie avant engageant le siège de soupape, après l'actionnement de la soupape par suite d'une chute de pression dans le tuyau.

2. Soupape selon la revendication 1, dans laquelle le siège de soupape (9) est cylindrique et la surface de siège (10) de l'élément de soupape (7) est conique.

3. Soupape selon la revendication 1 ou 2, dans laquelle l'élément de soupape (7) présente, à sa partie avant faisant face à la sortie (5), une ouverture (14) formant un siège supplémentaire d'un élément obturateur (15), par exemple une bille, soumis à l'action d'un ressort, le ressort (13), l'élément obturateur (15) et l'ouverture (14) formant une soupape de limitation de la pression lorsque la soupape de tuyau flexible réagissant à une chute de pression est en état actionné.
